# EUROPEAN PATENT APPLICATION

(11) **EP 2 063 144 A1**
(43) Date of publication of application: **27.05.2009**
(21) Application number: 08020143.7
(22) Date of filing: 19.11.2008
(51) Int. Cl.: F16D 13/72

(54) **Cooling structure of clutch apparatus for transmission**

(30) Priority: 20.11.2007 JP 2007300604
(71) Applicant: AISIN AI Co., Ltd., Nishio-shi, Aichi-ken (JP)
(72) Inventor: Ogami, Shiro, Nishio-shi Aichi-ken (JP); Yoshimi, Takuya, Nishio-shi Aichi-ken (JP); Arakawa, Tomohiro, Nishio-shi Aichi-ken (JP)
(74) Representative: Serjeants

(57) **Abstract**

A cooling structure of a clutch apparatus for a transmission includes a housing (10), a partition wall (10a) provided inside the housing (10), first and second chambers (12, 13) respectively formed inside the housing (10) at first and second sides of the partition wall (10a), a clutch mechanism (15) provided inside the first chamber (12). A cylindrical clutch case (16) including an opening (16a) is provided at an outer circumference of the clutch mechanism (15). The cooling structure further includes a first communication passage (10d) communicating with the first and second sides of the partition wall (10a), at least one helical protrusion (20) provided at an outer cylindrical surface of the clutch case (16), and a guiding cylinder (21) provided at an outer circumference of the clutch case (16) with a space between the helical protrusion (20) and the guiding cylinder (21). The helical protrusion (20) guides the coolant existing between the clutch case (16) and the guiding cylinder (21) to the first chamber (12) from an axial end portion of the guiding cylinder (21).

## Description

### FIELD OF THE INVENTION

The present invention generally relates to a cooling structure of a clutch apparatus for a transmission.

### BACKGROUND

A transmission including a wet frictional clutch is disclosed in JP2005-299708A (hereinafter, referred to as reference 1), for example. According to the reference 1, a clutch housing is provided at a first side (front side) of a transmission case, and a cover plate (a front cover) is provided inside the clutch housing, thereby forming a first chamber inside the clutch housing at a first side (front side) of the cover plate and a second chamber at a second side (rear side) of the cover plate. The second chamber is structured with the transmission case and a space defined at the second side of the cover plate inside the clutch housing, i.e., a clutch chamber. Lubricant (coolant) is accumulated in the second chamber. Further, an electromagnetic multi-plate clutch mechanism (a wet frictional clutch mechanism), which is assembled on an input shaft of a transmission with multiple shift stages, is provided inside the clutch chamber of the second chamber.

According to such transmission, the lubricant accommodated in the second chamber is supplied to an inside of the wet frictional clutch mechanism by an oil pump. The lubricant supplied to the wet frictional clutch mechanism passes through an inner portion of the wet frictional clutch mechanism by the centrifugal force, thereby cooling the frictional clutch mechanism. Then, the lubricant is discharged from an opening formed at an outer circumference of a clutch case, in which the wet frictional clutch mechanism is accommodated, to the clutch chamber. Then, the lubricant is returned to the transmission case through a communication bore formed at a partition provided between the transmission case and the clutch chamber.

According to the reference 1, the lubricant discharged from the wet frictional clutch to the clutch chamber is delivered to an outer circumference of the wet frictional clutch and revolves therewith. Therefore, the lubricant supplied to the inner portion of the wet frictional clutch is prevented from being discharged from the opening of the outer circumference of the clutch case and is not immediately returned to the transmission case. Accordingly, a cooling efficiency of the clutch mechanism is reduced. Further, because of agitating resistance generated between the wet frictional clutch and the lubricant delivered thereto, torque transmitting efficiency of the transmission may be also reduced, and fuel consumption may be increased.

A need thus exists for a cooling structure of a clutch appararus for a transmission, which improves cooling efficiency and torque transmitting efficiency of the transmission and which restrains an increase of fuel consumption.

### SUMMARY OF THE INVENTION

According to an aspect of the present invention, a cooling structure of a clutch apparatus for a transmission includes a housing, a partition wall, a first chamber, a second chamber and a clutch mechanism. The partition wall is provided inside the housing and partitions a space inside the housing. The first chamber is formed inside the housing at a first side of the partition wall. Further, the first chamber is closed by a plate member. The second chamber, which is employed for accommodating a transmission mechanism, is formed inside the housing at a second side of the partition wall. The clutch mechanism is provided inside the first chamber and connected to a first rotational shaft and a second rotational shaft. The first rotational shaft is rotatably supported by the plate member. The second rotational shaft is rotatably supported coaxially with the first rotational shaft by the partition wall and protrudes to the second chamber so as to be connected to the transmission mechanism. The clutch mechanism includes a cylindrical clutch case provided at an outer circumference of the clutch mechanism. The clutch case includes an opening at an outer cylindrical surface thereof. Coolant supplied to the clutch mechanism from the second chamber is discharged to an outside of the clutch case through the opening. The cooling structure of the clutch apparatus further includes a first communication passage, at least one helical protrusion and a guiding cylinder. The first communication passage is formed at a lower portion of the partition wall. The first communication passage communicates with the first side of the partition wall and the second side of the partition wall. The helical protrusion is provided at the outer cylindrical surface of the clutch case. The guiding cylinder is provided at an outer circumference of the clutch case and coaxially arranged with the clutch case with a space between an outer circumferential portion of the helical protrusion and an inner circumferential surface of the guiding cylinder. The guiding cylinder is connected to one of the partition wall and the plate member. The helical protrusion guides the coolant existing between the clutch case and the guiding cylinder to the first chamber from an axial end portion of the guiding cylinder.

Due to the above described structure, the coolant discharged from the clutch case to the space between the clutch case and the guiding cylinder through the opening is immediately impelled from the end portion of the guiding cylinder to the first chamber and flows, or drops, towards the lower portion of the first chamber. Then, the coolant is returned to the second chamber through the first communication passage formed at the partition wall. Thus, the coolant does not fill a circumference of the clutch mechanism. Further, the coolant is not prevented from being discharged from an inside of the clutch mechanism to an outside of the clutch case via the opening. Therefore, cooling efficiency of the clutch mechanism is not reduced. Still further, because a generation of agitating resistance between the clutch mechanism and the coolant is restrained, torque transmitting efficiency of the transmission is not reduced. Further, fuel consumption is restrained from increasing.

Still further according to another aspect of the present invention, the helical protrusion inclines relative to an axial end of the clutch case by a predetermined helical angle so that the helical protrusion guides the coolant existing between the clutch case and the guiding cylinder to an opposite side of one of the partition wall and the plate member to which the guiding cylinder is connected.

Due to the above described structure, the coolant discharged to the space between the clutch case and the guiding cylinder is guided to the first chamber and flows towards the lower portion of the first chamber from a large space formed between the partition wall and an opened axial end portion of the guiding cylinder. Then, the coolant is returned to the second chamber through the first communication passage formed at the lower portion of the partition wall. Thus, the coolant accumulated between the clutch case and the guiding cylinder is immediately discharged therefrom. Accordingly, the cooling efficiency of the clutch mechanism is prevented from being reduced and further, the generation of agitating resistance between the clutch mechanism and the coolant is largely reduced.

Still further according to another aspect of the present invention, the guiding cylinder is connected to the plate member. Further, the helical protrusion guides the coolant existing between the clutch case and the guiding cylinder towards the partition wall.

Due to the above described structure, the coolant accumulated between the clutch case and the guiding cylinder is guided to a position adjacent to the partition wall having the first communication passage and flows in the second. Then, the coolant is easily returned to the second chamber through the first communication passage, so that the amount of the coolant accumulated in the first chamber is reduced. Thus, the coolant is not prevented from being discharged from the clutch case through the opening, so that the cooling efficiency of the clutch mechanism is prevented from being reduced. In addition, the generation of the agitation resistance between the clutch mechanism and the coolant is further reduced.

Still further according to another aspect of the present invention, the cooling structure further includes an oil guide member and a second communication passage. The oil guide member is provided between the clutch case and the partition wall. Further, the oil guide member includes a gutter portion extending in an axial direction of the second rotational shaft. The gutter portion receives the coolant flowing towards a lower portion of the first chamber by being discharged from the clutch case by the helical protrusion when the clutch mechanism rotates. The second communication passage is formed at the partition wall. Further, the second communication passage communicates with the gutter portion of the oil guide member and the second chamber.

Due to the above described structure, some of the coolant flowing into the first chamber by being discharged from the space defined between the clutch case and the guiding cylinder by the helical protrusion is received by the gutter portions. Then, the coolant is returned to the second chamber through the second communication passage formed at the partition well at a different position from a position where the first communication passage is formed. Thus, the coolant inside the first chamber is returned to the second chamber not only through the first communication passage, but also through the gutter portion of the oil guide member and the second communication passage. Therefore, the amount of the coolant returned to the second chamber from the first chamber is further increased, while the amount of the coolant remaining inside the fust chamber is reduced. Accordingly, the coolant is not prevented form being discharged from the clutch case of the clutch mechanism through the opening, thereby leading to an improvement of the cooling efficiency of the clutch mechanism, and the generation of the agitation resistance between the clutch mechanism and the coolant is also reduced.

Still further according to another aspect of the present invention, the oil guide member includes a body potion, a first pair of the gutter portions and a second pair of the gutter portions. The body portion is formed in an inverted U-shape having an upper base portion and a pair of side portions respectively extending from end portions of the upper base portion. Further, the body portion is provided at an outer circumference of the second rotational shaft and extends in the axial direction of the second rotational shaft for covering the second rotational shaft. The first pair of the gutter portions is respectively formed at outer surfaces of the pair of side portions of the body portion at lower end portions of the pair of side portions. The second pair of the gutter portions is respectively formed at the outer surfaces of the pair of the side portions of the base portion at an upper side of the first pair of the gutter potions. Further, a first pair of the second communication passage is formed at the partition wall and respectively communicates with the first pair of the gutter portions and the second chamber. Still further, a second pair of the second communication passage is formed at the partition wall and respectively communicates with the second pair of the gutter portions and the second chamber.

Due to the above described structure, some of the coolant flowing into the first chamber by being discharged from the space defined between the clutch case and the guiding cylinder by the helical protrusion is received by the first pair of the gutter portions and is returned to the second chamber through the first pair of the second communication passages formed at the partition wall at the different position from the position where the first communication passage is formed. Some of the coolant is received by the second pair of the gutter portions and is returned to the second chamber through the second pair of the second communication passages formed at the partition wall at a different position from the position where the first pair of the second communication passages is formed. Thus, the coolant inside the first chamber is returned to the second chamber not only through the first communication passage, but also through the first and second pairs of gutter portions of the oil guide member and the first and second pairs of the second communication passages. Therefore, the amount of the coolant returned to the second chamber from the first chamber is further increased, while the amount of the coolant remaining inside the first chamber is reduced. Accordingly, the coolant is not prevented form being discharged from the clutch case of the clutch mechanism through the opening, thereby leading to an improvement of the cooling efficiency of the clutch mechanism, and the generation of the agitation resistance between the clutch mechanism and the coolant is also reduced.

Still further according to another aspect of the present invention, a drain hole is formed at the guiding cylinder at a position facing an end portion of the helical protrusion.

### BRIEF DESCRIPTION OF THE DRAWINGS

The foregoing and additional features and characteristics of the present invention will become more apparent from the following detailed description considered with reference to the accompanying drawings, wherein;

Fig. 1 is a cross sectional view, schematically illustrating a cooling structure of a frictional clutch of a transmission according to an embodiment, taken along a longitudinal direction of the transmission;

Fig. 2 is a cross sectional view, schematically illustrating the cooling structure of the frictional clutch of the transmission, taken along line II-II in Fig. 1; and

Fig. 3 is a cross sectional view, schematically illustrating the cooling structure of the frictional clutch of the transmission, taken along line III-III in Fig. 1.

### DETAILED DESCRIPTION

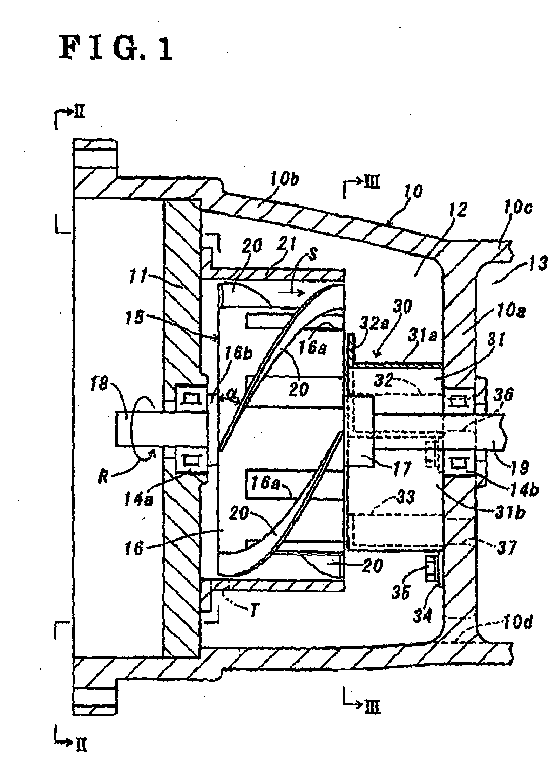

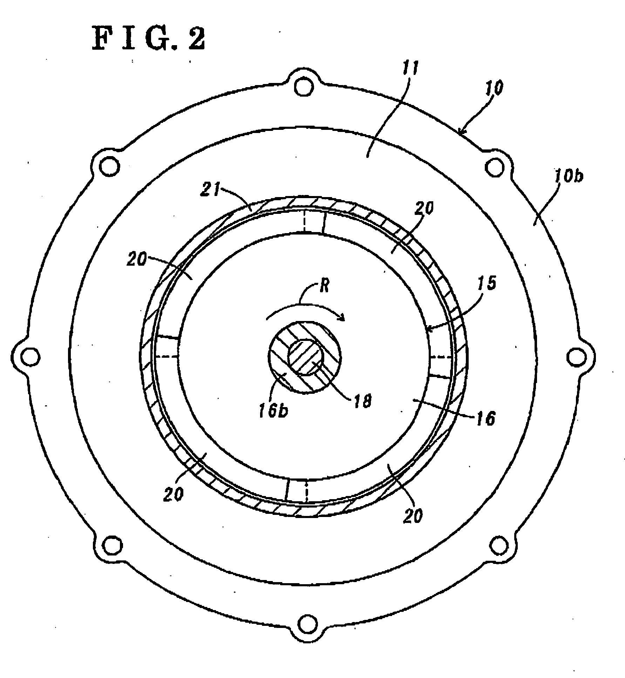

An embodiment of a cooling structure of a clutch apparatus for a transmission will be described hereinafter with reference to Figs. 1 to 3. The cooling structure is applied to a transmission provided with the clutch apparatus. As illustrated in Fig. 1, a cooling structure includes an approximately cylindrical housing 10 (transmission housing). Hereinafter, left-right directions in Fig. 1 correspond to front-rears direction (longitudinal direction) of the cooling structure. A partition wall 10a is provided inside the housing 10 at a longitudinally intermediate portion of the transmission so as to partition a space inside the housing 10. A front side portion (i.e., a left side portion in Fig. 1) of the housing 10 is covered with a cover plate 11 (serving as a plate member), so that an inside of the housing 10 is closed by the cover plate 11 in a fluid-tight manner. Thus, a clutch chamber 12 (serving as a first chamber) is formed inside the housing 10 at a front side (serving as a first side) of the partition wall 10a, i.e., between the cover plate 11 and the partition wall 10a. The cooling structure of the clutch apparatus further includes a clutch mechanism (wet frictional clutch mechanism) 15. The clutch mechanism 15 is rotatably supported inside the clutch chamber 12. Further, the clutch mechanism 15 includes a cylindrical clutch case 16. The clutch case 16 is provided at an outer circumference of the clutch mechanism 15 and arranged to be coaxial therewith. Plural helical protrusions 20 are fixedly provided at an outer cylindrical surface of the clutch case 16 of the clutch mechanism 15. Further, a guiding cylinder 21 is provided around the clutch case 16 of the clutch mechanism 15 and arranged to be coaxial therewith. One axial end of the guiding cylinder 21 is fixedly connected to the cover plate 11. Still further, an oil guide member 30 fixedly connected to the partition wall 10a is provided at a rear side of the clutch mechanism 15, i.e., between the clutch case 16 and the partition plate 10a.

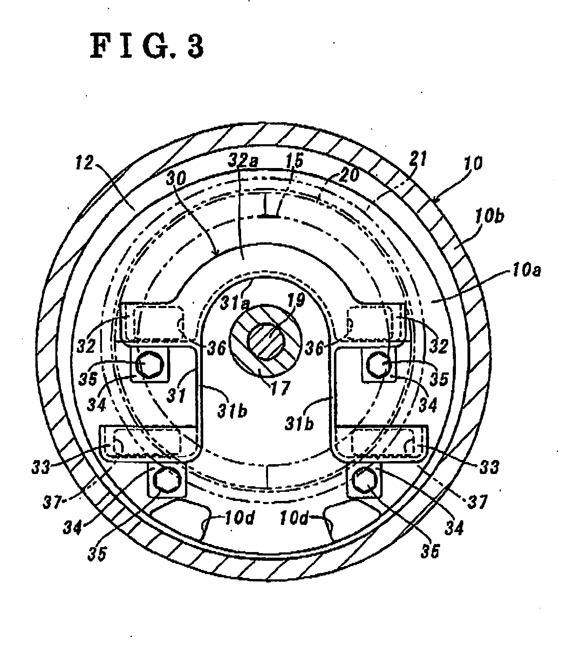

As best shown in Figs. 1 and 3, the transmission case 10 is formed in a cylindrical shape and is structured with a bell-shaped housing portion 10b and a body portion 10c. The bell-shaped housing portion 10b is connected to an engine of the vehicle and is formed at a front side of the body portion 10c. The partition wall 10a is formed between the bell-shaped housing portion 10b and the body portion 10c of the transmission case 10. The cover plate 11 is provided inside the bell-shaped housing portion 10b and fixed to a front portion thereof by connecting members (bolts), so that the clutch chamber 12 is formed between the cover plate 11 and the partition wall 10a in a fluid-tight manner. On the other hand, a rear cover is connected to a rear end of the body portion 10c of the transmission case 10 by the connecting members (bolts). Thus, a transmission chamber 13 (serving as a second chamber) for accommodating a transmission mechanism is formed at a rear side (serving as a second side) of the partition wall 10a, i.e., between the rear cover and the partition wall 10a, in a fluid tight manner. One end of a rotational shaft 19 (serving as a second rotational shaft) supported by the partition wall 10a via a roller bearing 14b protrudes to the transmission chamber 13 so as to be connected to the transmission mechanism provided inside the transmission chamber 13. Thus, the rotational shaft 19 functions as an input shaft for the transmission mechanism (hereinafter, the rotational shaft 19 is referred to as transmission input shaft 19). Another end of the transmission input shaft 19 protrudes to the clutch chamber 12. A pair of communication bores 10d (each serving as a first communication passage), which communicate with both of the clutch chamber 12 and the transmission chamber 13, is formed at a lower portion of the partition wall 10a. Still further, a pair of communication bores 36 (each serving as a second communication passage) and a pair of communication bores 37 (each serving as the second communication passage) are also formed at the partition wall 10a so as to communicate with both of the clutch chamber 12 and the transmission chamber 13. More specifically, the pair of communication bores 36 (serving as a second pair of the second communication passage) is provided at a vertically intermediate portion of the partition wall 10a, and the pair of communication bores 37 (serving as a first pair of the second communication passage) is provided at the partition wall 10a at a lower side of the pair of communication bores 36.

As best shown in Fig. 1, the clutch mechanism 15 is a wet multi-plate clutch including the clutch case 16, a hub portion, plural frictional plates and plural clutch plates. The hub portion of the clutch mechanism 15 is rotatably supported and arranged coaxially with an input-side boss portion 16b which is integrally formed at the clutch case 16 so as to be coaxial therewith. Further, an output-side boss portion 17 is integrally formed at the hub portion so as to be coaxial therewith. The frictional plates and the clutch plates are axially alternately aligned. An outer circumferential portion of each of the frictional plates is axially movably engaged with the clutch case 16. An inner circumferential portion of each of the clutch plates is axially movably apline-engaged with the hub portion. Each of the clutch plates and each of the frictional plates are engaged with one another by being pressed by a spring when the clutch mechanism 15 is not operated. The clutch mechanism 15 releases, by means of an operation of an electromagnet, an engagement between each frictional plate and each clutch plate. Plural slits 16a (each serving as an opening) are formed at an outer circumferential portion of the clutch case 16 along an axial direction. The slits 16a are axially movably engaged with plural protrusions formed at outer circumferences of the frictional plates.

The output-side boss portions 17 of the hub portion of the clutch mechanism 15 is coaxially connected to an end of the transmission input shaft 19, which protrudes to the clutch chamber 12, by being spline-engaged therewith. A rotational shaft 18 (serving as a first rotational shaft) is supported by the cover plate 11 via a roller bearing 14a. One end portion of the rotational shaft 18 is coaxially connected to the input-side boss portion 16b of the clutch case 16 by being spline-engaged therewith. Thus, the rotational shaft 18 functions as an input shaft for the clutch mechanism 15 (hereinafter, the rotational shaft 18 is referred to as clutch input shaft 18), Thus, the clutch mechanism 15 is rotatably supported inside the clutch chamber 12 at the vicinity of the cover plate 11 by the clutch input shaft 18 and the transmission input shaft 19. Another end portion of the clutch input shaft 18 protrudes to a front side of the cover plate 11 so as to be connected to an output shaft of the engine via a jointing member.

The axial end portion of the guiding cylinder 21 is connected to the cover plate 11 at the inside of the clutch chamber 12 by connecting members, such as screw, and coaxially arranged with the clutch case 16, The guiding cylinder 21 covers an entire outer circumference of the clutch case 16 with a predetermined space between an outer circumferential portion of each of the helical protrusions 20 of the clutch case 16 and an inner circumferential surface of the guiding cylinder 21 in a radial direction. Each of the plural helical protrusions 20 is formed as an arc-shaped thin ribbon plate. Inner rims of the plural helical protrusions 20 are fixed to the outer circumferential portion (outer cylindrical surface) of the clutch case 16 and protrude radially therefrom. According to the embodiment, four of the helical protrusions 20 are provided. Outer rims of the helical protrusions 20 are arranged adjacently to the inner circumferential surface of the guiding cylinder 21 while not being in contact therewith. As illustrated in Fig. 1, each of the helical protrusions 20 inclines relative to an axial end of the clutch case 16 by a predetermined helical angle α. Because of the helical angle α, lubricant (serving as coolant) existing between the clutch case 16 and the guiding cylinder 21 is impelled (guided) towards the partition wall 10a in a direction indicated with an arrow S (hereinafter, referred to as direction S) when the clutch mechanism 15 is driven by the engine to rotate in a rotational direction indicated with an arrow R (hereinafter, referred to as a rotational direction R).

The lubricant transferred from the transmission chamber 13 to the clutch chamber 12 by an oil pump is supplied to the inside of the clutch mechanism 15 through an oil passage formed inside the transmission input shaft 19 and flows through the frictional plates and the clutch plates to lubricate and cool the clutch mechanism 15. Further, the lubricant is discharged from the slits 16a of the clutch case 16 to a space defined between the clutch case 16 and the guiding cylinder 21 (i.e., to the predetermined space defined between the outer circumferential portions of the helical protrusions 20 and the inner circumferential surface of the guiding cylinder 21). Then, the lubricant accumulated between the clutch case 16 and the guiding cylinder 21 is impelled towards the partition wall 10a in the direction S by the helical protrusions 20.

The oil guide member 30 is provided, inside the clutch chamber 12, between the partition wall 10a and the clutch mechanism 15 (the clutch case 16) supported at the vicinity of the cover plate 11. The oil guide member 30 is structured with a body portion 31, a pair of upper gutter portions 32 and a pair of lower gutter portions 33, which are formed integrally with one another. As illustrated in Figs. 1 and 3, the body portion 31 of the oil guide member 30 is structured with an arc-shaped upper base portion 31a and a pair of side portions 31b respectively extending from end portions of the upper base portion 31a. Thus, the body portion 31 of the oil guide member 31 exhibits an inverted U-shaped cross section. The pair of upper gutter portions 32 (serving as a second pair of the gutter portions), which are respectively provided at an upper portion of the side portions 31b of the body portion 31, extends outwardly therefrom. The pair of lower gutter portions 33 (serving as a first pair of the gutter portions), which are respectively provided at a lower portion (at lower end portions) of the side portions 31b of the body portion 31, extends outwardly therefrom. Each of the upper and lower gutter portions 32 and 33 is formed in an approximately U-shape when seen in a cross section. An upper portion of each of the upper and lower gutter portions 32 and 33 is opened. An end surface, which is adjacent to the clutch mechanism 15, of each of the upper and lower gutter portions 32 and 33 is closed. On the other hand, another end surface, which is adjacent to the partition wall 10a, of each of the upper and lower gutter portions 32 and 33 is opened. The end surfaces of the upper gutter portions 32, which are adjacent to the clutch mechanism 15, are connected with each other by an are-shaped flange 32a. The lower gutter portions 33 extend outwardly further than the corresponding upper gutter portions 32.

The body portion 31 extends in the axial direction of the transmission input shaft 19 (i.e., in a longitudinal direction of the housing 10) for covering the transmission input shaft 19. Attachment lugs 34, which respectively extend from lower base portions of the upper and lower gutter portions 32 and 33, are formed at the end portions (end surfaces) thereof, which are adjacent to the partition wall 10a. The attachment lugs 34 are brought into contact with the partition wall 10a and are attached thereto by means of bolts 35, respectively. In a state where the upper and lower gutter portions 32, 33 of the oil guide member 30 are attached to the partition wall 10a, the communication bores 36 formed at the partition wall 10a communicate with the upper gutter portions 32, respectively, via opened end portions of the upper gutter portions 32. In the same manner, the communication bores 37 formed at the partition wall 10a communicate with the lower gutter portions 33, respectively, via opened end portions of the lower gutter portions 33. Further, a space (gap) is provided between the oil guide member 30 and the clutch mechanism 15 (the guiding cylinder 21) so that the oil guide member 30 and the clutch mechanism 15 do not contact each other.

The lubricant impelled from the space between the clutch case 16 and the guiding cylinder 21 towards the partition wall 10a flows along an outer surface of the body portion 31 of the oil guide member 30 from the upper base portion 31a to the side portions 31b thereof. Some of the lubricant flowing along the body portion 31 is received by the upper gutter portions 32 of the oil guide member 30 and returned to the transmission chamber 13 through the communication bores 36. Further, some of the lubricant is received by the lower gutter portions 33 of the oil guide member 30 and returned to the transmission chamber 13 through the communication bores 37. The rest of the lubricant flowing to the lower portion of the clutch chamber 12 is returned to the transmission chamber 13 through the lower communication bores 10d formed at the lower portion of the partition wall 10a.

As described above, the lubricant is supplied to the clutch mechanism 15 through the oil passage formed inside the transmission input shaft 19 to lubricate and cool the clutch mechanism 15. Then, the lubricant is discharged from the clutch case 16 to the space between the clutch case 16 and the guiding cylinder 21 through the slits 16a. The lubricant discharged from the clutch case 16 is immediately impelled from the end portion of the guiding cylinder 21 to the clutch chamber 12 towards the partition wall 10a and flows, or drops, towards the lower portion of the clutch chamber 12. Then, the lubricant is returned to the transmission chamber 13 through the communication bores 36, 37 and the lower communication bores 10d, which are formed at the partition wall 10a. The lubricant guided (impelled) to the clutch chamber 12 from the space between the clutch case 16 and the guiding cylinder 21 is prevented from being returned thereto by being blocked by the guiding cylinder 21. Thus, the lubricant does not fill a circumference of the clutch mechanism 15. Further, the lubricant is not prevented from being discharged from an inside of the clutch mechanism 15 to an outside of the clutch case 16 via the slits 16a (openings). Therefore, cooling efficiency of the clutch mechanism 15 is not reduced. Still further, because a generation of agitating resistance between the clutch mechanism 15 and the lubricant is restrained, torque transmitting efficiency of the transmission is not reduced. Further, the fuel consumption is restrained from increasing.

According to the embodiment, the guiding cylinder 21 is attached to the cover plate 11, and the helical protrusions 20 provided at the outer surface of the clutch case 16 guide the lubricant accumulated between the clutch case 16 and the guiding cylinder 21 towards the partition wall 10a in the direction S when the clutch mechanism 15 is driven to rotate in the rotational direction R by the engine. So configured, the lubricant discharged (guided) to the clutch chamber 12 flows towards the lower portion of the clutch chamber 12 from a large space formed between the partition wall 10a and the opened axial end portion of the guiding cylinder 21. Thus, because the lubricant is immediately guided to the clutch chamber 12 from the space between the clutch case 16 and the guiding cylinder 21, the lubricant is smoothly discharged from the inside of the clutch mechanism 15 to the outside of the clutch case 16 via the slits 16a. Accordingly, the cooling efficiency of the clutch mechanism 15 is prevented from being reduced and further, the generation of agitating resistance between the clutch mechanism 15 and the lubricant is largely reduced. The present invention is not limited to the embodiment described above. As illustrated in Fig. 1, according to the embodiment, each of the helical protrusions 20 inclines upwardly from left to right sides of the clutch case 16, so that the helical protrusions 20 guide the lubricant accumulated between the clutch case 16 and the guiding cylinder 21 in the direction S (i.e., towards the partition wall 10a). Alternatively, each of the helical protrusions 20 may incline downwardly from left to right sides of the clutch case 16. So configured, the helical protrusions 20 may guide the lubricant accumulated between the clutch case 16 and the guiding cylinder 21 towards the cover plate 11, i.e., in an inverted direction of the direction S, when the clutch apparatus rotates in the rotational direction R. Further, at least one of drain holes T (indicated with dot lines) extending in the circumferential direction of the guiding cylinder 21 may be formed at the guiding cylinder 21 at an axial position facing end portions of the helical protrusions 20 adjacent to the cover plate 11. So configured, the lubricant is discharged to the clutch chamber 12 from the plural drain holes T. Further according to the embodiment, the clutch case 16 (the input-side boss portion 16b) is connected to the clutch input shaft 18, and the hub portion of the clutch mechanism 15 is connected to the transmission input shaft 19, so that the clutch case 16 is arranged at a torque input side relative to the clutch apparatus and the hub portion of the clutch mechanism 15 is arranged at a torque output side relative to the clutch apparatus. Alternatively, the hub portion of the clutch mechanism 15 may be connected to the clutch input shaft 18 and the clutch case 16 may be connected to the transmission input shaft 19.

Further according to the embodiment, the guiding cylinder 21 is attached to the cover plate 11, and the helical protrusions 20 impel the lubricant accumulated between the clutch case 16 and the guiding cylinder 21 towards the partition wall 10a when the clutch mechanism 15 rotates in the rotational direction R. So configured, the lubricant is discharged to a position adjacent to the partition wall 10a having the communication bores 10d, 36, 37 and flows in the clutch chamber 12. Then, the lubricant is easily returned to the transmission chamber 13 through the communication bores 36, the communication bores 37 and the lower communication bores 10d. Thus, the lubricant is not prevented from being discharged from the clutch case 16 through the slits 16a, so that the cooling efficiency of the clutch mechanism 15 is prevented from being reduced. In addition, the generation of the agitation resistance between the clutch mechanism 15 and the lubricant is further reduced.

Still further according to the embodiment, the oil guide member 30 is provided inside the clutch chamber 12 at a position between the clutch mechanism 15 (clutch case 16) and the partition wall 10a. The oil guide member 30 includes the upper gutter portions 32, which are respectively formed at the upper portions of the side portions 31b of the inverted U-shaped body portion 31, and the lower gutter portions 33, which are respectively formed at the lower portions (lower end portions) of the side potions 31b. So configured, the lubricant discharged from the space between the clutch case 16 and the guiding cylinder 21 by being impelled by the helical protrusions 20 flows along the inverted U-shaped body portion 31 of the oil guide member 30 from the upper base portion 31a to the side portions 31b of the body portion 31. As described above, some of the lubricant is received by the upper gutter portions 32 so as to be returned to the transmission chamber 13 through the communication bores 36 formed at the partition wall 10a at a different position from a position where the lower communication bores 10d are formed, and some of the lubricant is received by the lower gutter portions 33 so as to be returned to the transmission chamber 13 through the communication bores 37 formed at the partition wall 10a at a different position from the position where the communication bores 36 are formed. Thus, the lubricant inside the clutch chamber 12 is returned to the transmission chamber 13 not only through the lower communication bores 10d, but also through the upper and lower gutter portions 32, 33 of the oil guide member 30 and the communication bores 36 and 37. Therefore, the amount of the lubricant returned to the transmission chamber 13 from the clutch chamber 12 is further increased, while the amount of the lubricant remaining inside the clutch chamber 12 is reduced. Accordingly, the lubricant is not prevented form being discharged from the clutch case 16 of the clutch mechanism 15 through the slits 16a, thereby leading to an improvement of the cooling efficiency of the clutch mechanism 15, and the generation of the agitation resistance between the clutch mechanism 15 and the lubricant is also reduced. According to the embodiment, two of the upper gutter portions 32 and two of the lower gutter portions 33 (i.e., four gutter portions) are formed at the oil guide member 30, and two of the communication bores 36 and two of the communication bores 37 (i.e., four communication bores) are formed at the partition wall 10a. However, the number of such gutter portions of the oil guide member 30 and the number of such communication bores of the partition wall 10a are not limited to four, respectively. Alternatively, the number of the gutter portions of the oil guide member 30 and the communication bores of the partition wall 10a may be modified to be less than or more than four.

Still further according to the embodiment, the cooling structure is applied to the transmission including the wet multi-plate frictional clutch. Alternatively, the cooling structure may be applied to the transmission including a dual clutch apparatus (which is indicated in JP2007-255558A, for example). The dual clutch apparatus includes a clutch case connected to a clutch input shaft, first and second hub portions, a first set of a frictional plate and a clutch plate (hereinafter, referred to as first plate set), a second set of the frictional plate and the clutch plate (hereinafter, referred to as second plate set), a first electromagnet and a second electromagnet. The first and second hub portions are provided inside the clutch case and coaxially arranged to be rotatable independently from each other. The first plate set, which is provided inside the clutch case, releaseably connects the clutch case and the first hub portion. The second plate set, which is also provided inside the clutch case, releaseably connects the clutch case and the second hub portion. Connecting and disconnecting operations of the first plate set and the second plate set are performed independently from each other. The first electromagnet controls the connecting and disconnecting operations of the first plate set. The second electromagnet controls the connecting and disconnecting operations of the second plate set. The controlling operations of the first and second electromagnets are performed independently from each other. In such a structure, the transmission input shaft includes a first transmission input shaft connected to the first hub portion and a second transmission input shaft connected to the second hub portion. The second transmission input shaft is rotatably provided around the first transmission input shaft so as to be coaxial therewith. The helical protrusions are provided at the clutch case, in which the first and second hub portions and the first and second plate sets are housed, in the same manner as the embodiment described above. Further as described above, the guiding cylinder is provided around the clutch case. Still further, the oil guide may be provided between the clutch case and the transmission chamber in any desired manner.

## Claims

1. A cooling structure of a clutch apparatus for a transmission, comprising:
a housing (10);
a partition wall (10a) provided inside the housing (10) and partitioning a space inside the housing (10);
a first chamber (12) formed inside the housing (10) at a first side of the partition wall (10a), the first chamber (12) closed by a plate member (11);
a second chamber (13) for accommodating a transmission mechanism, the second chamber (13) formed inside the housing (10) at a second side of the partition wall (10a);
a clutch mechanism (15) provided inside the first chamber (12) and connected to a first rotational shaft (18) rotatably supported by the plate member (11) and a second rotational shaft (19) rotatably supported coaxially with the first rotational shaft (18) by the partition wall (10a) and protruding to the second chamber (13) so as to be connected to the transmission mechanism, the clutch mechanism (15) including a cylindrical clutch case (16) provided at an outer circumference of the clutch mechanism (15), the clutch case (16) having an opening (16a) at an outer cylindrical surface thereof, the opening (16a) through which coolant supplied to the clutch mechanism (15) from the second chamber (13) is discharged to an outside of the clutch case (16);
a first communication passage (10d) formed at a lower portion of the partition wall (10a), the first communication passage (10d) communicating with the first side of the partition wall (10a) and the second side of the partition wall (10a);
at least one helical protrusion (20) provided at the outer cylindrical surface of the clutch case (16); and
a guiding cylinder (21) provided at an outer circumference of the clutch case (16) and coaxially arranged with the clutch case (16) with a space between an outer circumferential portion of the helical protrusion (20) and an inner circumferential surface of the guiding cylinder (21), the guiding cylinder (21) connected to one of the partition wall (10a) and the plate member (11), wherein
the helical protrusion (20) guides the coolant existing between the clutch case (16) and the guiding cylinder (21) to the first chamber (12) from an axial end portion of the guiding cylinder (21).

2. The cooling structure of a clutch for a transmission according to claim 1, wherein
the helical protrusion (20) inclines relative to an axial end of the clutch case (16) by a predetermined helical angle (α) so that the helical protrusion (20) guides the coolant existing between the clutch case (16) and the guiding cylinder (21) to an opposite side of one of the partition wall (10a) and the plate member (11) to which the guiding cylinder (21) is connected.

3. The cooling structure of a clutch for a transmission according to claim 2, wherein
the guiding cylinder (21) is connected to the plate member (11), and
the helical protrusion (20) guides the coolant existing between the clutch case (16) and the guiding cylinder (21) towards the partition wall (10a).

4. The cooling structure of a clutch for a transmission according to claim 3, further comprising:
an oil guide member (30) provided between the clutch case (16) and the partition wall (10a), the oil guide member (30) including a gutter portion (32, 33) extending in an axial direction of the second rotational shaft (18, 19), the gutter portion (32, 33) receiving the coolant flowing towards a lower portion of the first chamber (12) by being discharged from the clutch case (16) by the helical protrusion (20) when the clutch mechanism (15) rotates; and
a second communication passage (36, 37) formed at the partition wall (10a), the second communication passage (36, 37) communicating with the gutter portion (32, 33) of the oil guide member (30) and the second chamber (13).

5. The cooling structure of a clutch for a transmission according to claim 4, wherein the oil guide member (30) includes:
a body portion (31) formed in an inverted U-shape having an upper base portion (31a) and a pair of side portions (31b) respectively extending from end portions of the upper base portion (31a), the body portion (31) provided at an outer circumference of the second rotational shaft (19) and extending in the axial direction of the second rotational shaft (19) for covering the second rotational shaft (19);
a first pair of the gutter portions (32) respectively formed at outer surfaces of the pair of side portions (31b) of the body portion (31) at lower end portions of the pair of side portions (31b); and
a second pair of the gutter portions (33) respectively formed at the outer surfaces of the pair of the side portions (31b) of the base portion (31) at an upper side of the first pair of the gutter portions (32),
and wherein
a first pair of the second communication passage (37) is formed at the partition wall (10a) and respectively communicates with the first pair of the gutter portions (37) and the second chamber (13), and
a second pair of the second communication passage (37) is formed at the partition wall (10a) and respectively communicates with the second pair of the gutter portions (36) and the second chamber (13).

6. The cooling structure of a clutch for a transmission according to claim 1, wherein
a drain hole (T) is formed at the guiding cylinder (21) at a position facing an end portion of the helical protrusion (20).
